# EUROPEAN PATENT APPLICATION

(11) **EP 3 819 901 A1**
(43) Date of publication of application: **12.05.2021**
(21) Application number: 19831503.8
(22) Date of filing: 03.07.2019
(51) Int. Cl.: G09G 5/10

(54) **METHOD AND DEVICE FOR ADJUSTING BRIGHTNESS OF VEHICLE-MOUNTED SCREEN, AND CONTROLLER AND RECORDING MEDIUM**

(30) Priority: 03.07.2018 CN 201810719316
(71) Applicant: NIO (ANHUI) HOLDING CO., LTD, Economic and Technological Development Zone Hefei Anhui 230601 (CN)
(72) Inventor: HU, Qingjian, Shanghai 201804 (CN)
(74) Representative: Patentwerk B.V.
(86) International application number: PCT/CN2019/094552
(87) International publication number: WO 2020/007319

(57) **Abstract**

A brightness adjustment method and apparatus for an in-vehicle screen, a controller, and a recording medium. The brightness adjustment method for the in-vehicle screen comprises: acquiring a traveling speed of a vehicle (S1); and adjusting brightness of the in-vehicle screen based on the acquired traveling speed of the vehicle (S2). According to the brightness adjustment method for the in-vehicle screen, the brightness of the in-vehicle screen can be automatically adjusted according to the speed of the vehicle, thereby facilitating user operations and improving safety of a user driving the vehicle.

## Description

### Technical Field

The invention relates to the technical field of vehicle control, and to a brightness adjustment method and apparatus for an in-vehicle screen, a controller, and a recording medium.

### Background Art

With larger screens in automobiles nowadays, content displayed with high brightness and a wide dynamic range will greatly distract users, especially when the users are traveling at medium-high speed, which may easily cause safety hazards. Nowadays, a center console screen and dashboard of a conventional vehicle are of constant brightness that cannot be adjusted automatically, or brightness adjustment usually needs to be made manually by the users, which is very likely to cause safety hazards during traveling.

### Summary of the Invention

The invention is implemented to overcome one or more of the above disadvantages or other disadvantages, and the used technical solutions are as follows:
According to an aspect of the invention, a brightness adjustment method for an in-vehicle screen is provided, comprising: acquiring a traveling speed of a vehicle; and adjusting brightness of the in-vehicle screen based on the acquired traveling speed of the vehicle.

Further, according to an aspect of the invention, said adjusting brightness of the in-vehicle screen based on the acquired traveling speed of the vehicle comprises: determining whether the acquired traveling speed of the vehicle is greater than or equal to a first threshold; and if yes, decreasing the brightness of the in-vehicle screen.

Further, according to an aspect of the invention, said adjusting brightness of the in-vehicle screen based on the acquired traveling speed of the vehicle further comprises: determining whether the acquired traveling speed of the vehicle is less than a second threshold; and if yes, increasing the brightness of the in-vehicle screen; wherein the second threshold is less than or equal to the first threshold.

Further, according to an aspect of the invention, said adjusting brightness of the in-vehicle screen based on the acquired traveling speed of the vehicle further comprises: before said decreasing the brightness of the in-vehicle screen, saving the brightness of the in-vehicle screen; and said increasing the brightness of the in-vehicle screen comprises adjusting the brightness of the in-vehicle screen to the saved brightness of the in-vehicle screen.

Further, according to an aspect of the invention, said acquiring the traveling speed of the vehicle comprises: acquiring an average traveling speed of the vehicle within a preset time period.

Further, according to an aspect of the invention, the in-vehicle screen comprises a center console screen and/or a dashboard screen.

According to another aspect of the invention, a brightness adjustment apparatus for an in-vehicle screen is provided, comprising: a speed acquisition module, configured to acquire a traveling speed of a vehicle; and a brightness adjustment module, configured to adjust brightness of the in-vehicle screen based on the acquired traveling speed of the vehicle.

Further, according to another aspect of the invention, the brightness adjustment module comprises: a determination submodule, configured to determine whether the acquired traveling speed of the vehicle is greater than or equal to a first threshold; and a brightness adjustment submodule, configured to decrease the brightness of the in-vehicle screen when the determination submodule determines that the acquired traveling speed of the vehicle is greater than or equal to the first threshold.

Further, according to another aspect of the invention, the determination submodule is further configured to determine whether the acquired traveling speed of the vehicle is less than a second threshold; and the brightness adjustment submodule is further configured to increase the brightness of the in-vehicle screen when the determination submodule determines that the acquired traveling speed of the vehicle is less than the second threshold; wherein the second threshold is less than or equal to the first threshold.

Further, according to another aspect of the invention, the brightness adjustment module further comprises a saving submodule configured to save the brightness of the in-vehicle screen before decreasing the brightness of the in-vehicle screen by the brightness adjustment submodule; and the brightness adjustment submodule is further configured to adjust the brightness of the in-vehicle screen to the saved brightness of the in-vehicle screen when the determination submodule determines that the acquired traveling speed of the vehicle is less than the second threshold.

Further, according to another aspect of the invention, the speed acquisition module is configured to acquire an average traveling speed of the vehicle within a preset time period.

Further, according to another aspect of the invention, the in-vehicle screen comprises a center console screen and/or a dashboard screen.

According to still another aspect of the invention, a controller is provided, which comprises a memory, a processor, and a program stored on the memory and capable of running on the processor, wherein when the program is executed by the processor, the steps of the method according to an aspect of the invention are implemented.

According to yet another aspect of the invention, a recording medium having a computer program stored thereon is provided, wherein the program is executable by a computer to implement the steps of the method according to an aspect of the invention.

According to the invention, the brightness of the in-vehicle screen can be automatically adjusted according to the speed of the vehicle, thereby facilitating user operations and improving the safety of a user driving the vehicle.

### Brief Description of the Drawings

FIG. 1 is an example flowchart of a brightness adjustment method for an in-vehicle screen according to an implementation of the invention.
FIG. 2 is an example block diagram of a brightness adjustment apparatus for an in-vehicle screen according to an implementation of the invention.
FIG. 3 is an example block diagram of a controller according to an implementation of the invention, configured to perform a brightness adjustment method for an in-vehicle screen according to an implementation of the invention.

### Detailed Description of Embodiments

The brightness adjustment method and apparatus for an in-vehicle screen, the controller, and the recording medium of the invention will be further described in detail below in conjunction with the accompanying drawings. It should be noted that the following detailed description of embodiments are exemplary rather than limiting, and are intended to provide a basic understanding of the invention, and are not intended to confirm key or decisive elements of the invention or limit the scope of protection.

The invention is described below with reference to block diagram illustrations, block diagrams and/or flowcharts of the methods and apparatuses in the embodiments of the invention. It will be understood that each block of these flowchart illustrations and/or block diagrams, and combinations of flowchart illustrations and/or block diagrams, can be implemented by computer program instructions. These computer program instructions may be provided for a processor or controller of a general-purpose computer, a dedicated computer, or another programmable data processing device to generate a machine, so that the instructions executed by the processor or controller of the computer or the another programmable data processing device create components for implementing the functions/operations specified in these flowcharts and/or blocks and/or one or more flow block diagrams. In particular, the above processor or controller comprises a vehicle control unit VCU and/or an electronic control unit ECU etc.

These computer program instructions may be stored in a computer-readable memory that can instruct a computer or another programmable processor to implement the functions in a specific manner, so that the instructions stored in the computer-readable memory generate a manufactured product containing instruction components that implement the functions/operations specified in one or more blocks of the flowchart and/or the block diagram.

These computer program instructions may be loaded onto the computer or the another programmable data processor, so that a series of operations and steps are performed on the computer or the another programmable processor, thereby generating computer-implemented processes. As such, the instructions executed on the computer or the another programmable data processor provide steps for implementing the functions or operations specified in one or more blocks in the flowchart and/or block diagram. It should also be noted that in some alternative implementations, the functions/operations shown in the blocks may not occur in the order shown in the flowchart. For example, two blocks shown in sequence may actually be executed substantially simultaneously or the blocks may sometimes be executed in a reverse order, depending on the functions/operations involved.

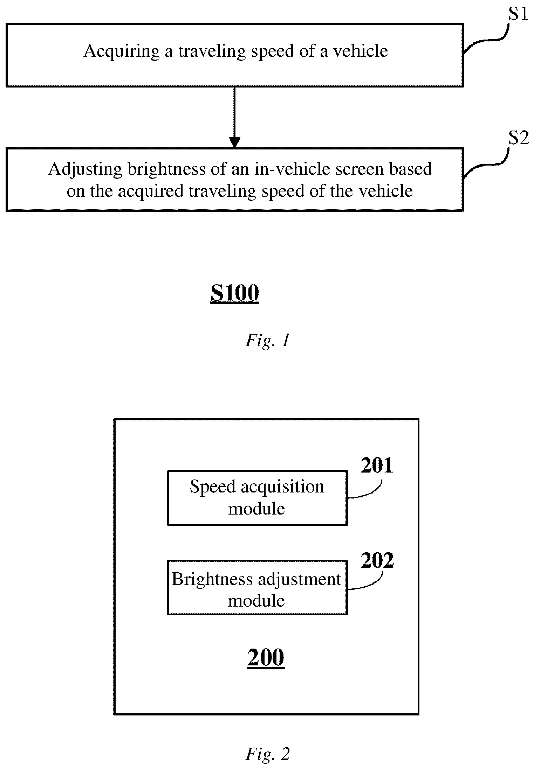

FIG. 1 is an example flowchart of a brightness adjustment method for an in-vehicle screen according to an implementation of the invention. As shown in FIG. 1, the method S100 comprises the step of: acquiring a traveling speed of a vehicle (step S1).

In an example, a vehicle speed sensor is used to obtain an instantaneous traveling speed of the vehicle. The vehicle speed sensor can be of electromagnetic induction type, photoelectric type, variable reluctance type, or Hall type. The type and installation location of the vehicle speed sensor are not limited in the application.

In an example, said acquiring a traveling speed of a vehicle comprises acquiring an average traveling speed of the vehicle within a preset time period. For example, an average traveling speed of the vehicle within the first 3 minutes or 5 minutes is acquired. The length of the preset time period is not limited in the application.

As shown in FIG. 1, the method S100 further comprises the step of: adjusting brightness of the in-vehicle screen based on the acquired traveling speed of the vehicle (step S2).

In an example, said adjusting brightness of the in-vehicle screen based on the acquired traveling speed of the vehicle comprises: determining whether the acquired traveling speed of the vehicle is greater than or equal to a first threshold; and if yes, decreasing the brightness of the in-vehicle screen. For example, it is determined whether the acquired traveling speed of the vehicle is greater than 80 km/h, and if yes, the brightness of the in-vehicle screen is decreased. 80 km/h is only an example, and the speed may be other values, such as 70 km/h, 60 km/h, 50 km/h, and the first threshold is not limited in the application.

In an example, said adjusting brightness of the in-vehicle screen based on the acquired traveling speed of the vehicle further comprises: determining whether the acquired traveling speed of the vehicle is less than a second threshold; and if yes, increasing the brightness of the in-vehicle screen; wherein the second threshold is less than or equal to the first threshold. In an example, the second threshold is equal to the first threshold. For example, it is determined whether the acquired traveling speed of the vehicle is less than 80 km/h, and if yes, the brightness of the in-vehicle screen is increased. In the case of a single threshold, the adjustment of the screen brightness is more sensitive, that is, the screen brightness will be decreased once the speed is above the threshold, and increased once the speed is below the threshold. In another example, the second threshold is less than the first threshold. For example, it is determined whether the acquired traveling speed of the vehicle is less than 70 km/h, and if yes, the brightness of the in-vehicle screen is increased. In the case of dual thresholds, the adjustment of the screen brightness will be less sensitive, and frequent adjustment of the screen brightness due to fluctuation of the vehicle speed around a certain threshold is avoided, which improves driving safety and user experience.

In an example, before said decreasing the brightness of the in-vehicle screen, the brightness of the in-vehicle screen is saved; and said increasing the brightness of the in-vehicle screen comprises adjusting the brightness of the in-vehicle screen to the saved brightness of the in-vehicle screen. By saving the original screen brightness and adjusting the screen brightness back to the original screen brightness when the traveling speed drops below the second threshold, manual adjustment by the user is avoided, and driving safety and user experience are improved.

The above in-vehicle screen comprises a center console screen and/or a dashboard screen.

According to the invention, the brightness of the in-vehicle screen can be automatically adjusted according to the speed of the vehicle, thereby facilitating user operations and improving the safety of a user driving the vehicle. By adjusting the brightness of the in-vehicle screen according to the averaged vehicle speed, the frequent adjustment of the screen brightness due to fluctuation of the instantaneous vehicle speed can be smoothed, and driving safety and user experience can be further improved. By using the dual thresholds of the vehicle speed to adjust the brightness of the in-vehicle screen, the frequent adjustment of the screen brightness due to fluctuation of the vehicle speed around a certain threshold can be avoided, and driving safety and user experience can be further improved. By saving the original screen brightness and adjusting the screen brightness back to the original screen brightness when the traveling speed drops below the second threshold, the manual adjustment by the user is avoided, and driving safety and user experience are improved.

FIG. 2 is an example block diagram of a brightness adjustment apparatus 200 for an in-vehicle screen according to an implementation of the invention. As shown in FIG. 2, the apparatus comprises: a speed acquisition module 201, configured to acquire a traveling speed of a vehicle; and a brightness adjustment module 202, configured to adjust brightness of the in-vehicle screen based on the acquired traveling speed of the vehicle.

In an example, the brightness adjustment module 202 comprises: a determination submodule, configured to determine whether the acquired traveling speed of the vehicle is greater than or equal to a first threshold; and a brightness adjustment submodule, configured to decrease the brightness of the in-vehicle screen when the determination submodule determines that the acquired traveling speed of the vehicle is greater than or equal to the first threshold. For example, the determination submodule is configured to determine whether the acquired traveling speed of the vehicle is greater than 80 km/h; and if yes, the brightness adjustment submodule is configured to decrease the brightness of the in-vehicle screen. 80 km/h is only an example, and the speed can be other values, such as 70 km/h, 60 km/h, 50 km/h, and the first threshold is not limited in the application.

In an example, the determination submodule is further configured to determine whether the acquired traveling speed of the vehicle is less than a second threshold; and the brightness adjustment submodule is further configured to increase the brightness of the in-vehicle screen when the determination submodule determines that the acquired traveling speed of the vehicle is less than the second threshold; wherein the second threshold is less than or equal to the first threshold. In an example, the second threshold is equal to the first threshold. For example, the determination submodule is further configured to determine whether the acquired traveling speed of the vehicle is less than 80 km/h; and if yes, the brightness adjustment submodule is further configured to increase the brightness of the in-vehicle screen. In the case of a single threshold, the adjustment of the screen brightness is more sensitive, that is, the screen brightness will be decreased once the speed is above the threshold, and increased once the speed is below the threshold. In another example, the second threshold is less than the first threshold. For example, the determination submodule is further configured to determine whether the acquired traveling speed of the vehicle is less than 70 km/h; and if yes, the brightness adjustment submodule is further configured to increase the brightness of the in-vehicle screen. In the case of dual thresholds, the adjustment of the screen brightness will be less sensitive, and frequent adjustment of the screen brightness due to fluctuation of the vehicle speed around a certain threshold is avoided, which improves driving safety and user experience.

In an example, the brightness adjustment module 202 further comprises a saving submodule configured to save the brightness of the in-vehicle screen before the brightness adjustment submodule decreases the brightness of the in-vehicle screen; and the brightness adjustment submodule is further configured to adjust the brightness of the in-vehicle screen to the saved brightness of the in-vehicle screen when the determination submodule determines that the acquired traveling speed of the vehicle is less than the second threshold. By saving the original screen brightness and adjusting the screen brightness back to the original screen brightness when the traveling speed drops below the second threshold, manual adjustment by the user is avoided, and driving safety and user experience are improved.

In an example, the speed acquisition module 201 is used to acquire the instantaneous traveling speed of the vehicle through a vehicle speed sensor. The vehicle speed sensor can be of electromagnetic induction type, photoelectric type, variable reluctance type, or Hall type. The type of the vehicle speed sensor is not limited in the application. Alternatively, the speed acquisition module 201 may be directly a component in the vehicle that has vehicle speed data, such as a VCU, a controller of a vehicle braking system, etc. Any component in the vehicle that can provide speed data can be used as a speed acquisition module herein. Other things not submitted here, such as vehicle wheel speed sensors, can also be used to provide the traveling speed of the vehicle.

In an example, the speed acquisition module 201 is configured to acquire an average traveling speed of the vehicle within a preset time period. For example, the speed acquisition module 201 is configured to acquire an average traveling speed of the vehicle within the first 3 minutes or 5 minutes. The length of the preset time period is not limited in the application.

The above in-vehicle screen comprises a center console screen and/or a dashboard screen.

According to the invention, the brightness of the in-vehicle screen can be automatically adjusted according to the speed of the vehicle, thereby facilitating user operations and improving the safety of a user driving the vehicle. By adjusting the brightness of the in-vehicle screen according to the averaged vehicle speed, the frequent adjustment of the screen brightness due to fluctuation of the instantaneous vehicle speed can be smoothed, and driving safety and user experience can be further improved. By using the dual thresholds of the vehicle speed to adjust the brightness of the in-vehicle screen, the frequent adjustment of the screen brightness due to fluctuation of the vehicle speed around a certain threshold can be avoided, and driving safety and user experience can be further improved. By saving the original screen brightness and adjusting the screen brightness back to the original screen brightness when the traveling speed drops below the second threshold, the manual adjustment by the user is avoided, and driving safety and user experience are improved.

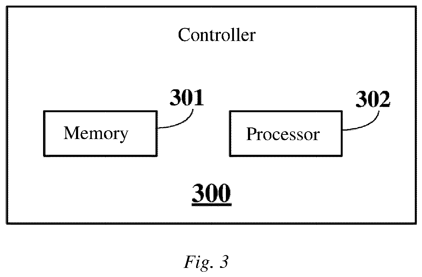

FIG. 3 shows an example block diagram of a controller according to an implementation of the invention, configured to perform a brightness adjustment method for an in-vehicle screen according to an implementation of the invention. As shown in FIG. 3, the controller 300 comprises a memory 301 and a processor 302. Although not shown, the controller 300 further comprises a computer program that is stored on the memory 301 and capable of running on the processor 302. When the program is executed by the processor, for example, the steps, shown in FIG. 1, of the brightness adjustment method for the in-vehicle screen according to an implementation of the invention are implemented. It should be understood that, according to the controller provided in the application, when it is applied to a vehicle, it can communicate with a component used to acquire vehicle speed (such as the vehicle speed sensor mentioned in the above example) and a brightness adjustment component (such as the in-vehicle screen mentioned in the above example). In addition, the controller may be implemented in an existing infotainment system of the vehicle, or implemented in the vehicle controller, or implemented alone.

In addition, as described above, the invention may also be implemented as a recording medium, which stores a program for enabling a computer to perform a brightness adjustment method for an in-vehicle screen according to one implementation of the invention.

Here, various recording media, such as disks (e.g., a magnetic disk, an optical disc, etc.), cards (e.g., a memory card, an optical card, etc.), semiconductor memories (e.g., a ROM, a non-volatile memory, etc.), and tapes (e.g., a magnetic tape, a cassette tape, etc.), can be used as the recording medium.

By recording, in these recording media, a computer program that enables a computer to perform the error correction method for speech recognition results in the implementations above or a computer program that enables a computer to implement functions of the error correction apparatus for speech recognition results in the implementations above and circulating the computer program, costs are reduced, and portability and versatility are improved.

Furthermore, the recording medium is loaded on a computer, the computer reads the computer program recorded in the recording medium and stores same in a memory, and a processor (a central processing unit (CPU) and a micro processing unit (MPU)) provided on the computer reads out and executes the computer program from the memory, whereby the error correction method for speech recognition results in the implementations above can be performed, and functions of the error correction apparatus for speech recognition results in the implementations above can be implemented.

Those of ordinary skill in the art should understand that the invention is not limited to the implementations above, and the invention can be implemented in many other forms without departing from the essence and scope thereof. Therefore, the presented examples and implementations are regarded to be schematic rather than restrictive, and without departing from the spirit and scope of the invention that are defined by the appended claims, the invention may cover various changes and replacements.

## Claims

1. A brightness adjustment method for an in-vehicle screen, comprising:
acquiring a traveling speed of a vehicle; and
adjusting brightness of the in-vehicle screen based on the acquired traveling speed of the vehicle.

2. The brightness adjustment method for the in-vehicle screen according to claim 1, wherein
said adjusting brightness of the in-vehicle screen based on the acquired traveling speed of the vehicle comprises:
determining whether the acquired traveling speed of the vehicle is greater than or equal to a first threshold; and
if yes, decreasing the brightness of the in-vehicle screen.

3. The brightness adjustment method for the in-vehicle screen according to claim 2, wherein
said adjusting brightness of the in-vehicle screen based on the acquired traveling speed of the vehicle further comprises:
determining whether the acquired traveling speed of the vehicle is less than a second threshold; and
if yes, increasing the brightness of the in-vehicle screen;
wherein the second threshold is less than or equal to the first threshold.

4. The brightness adjustment method for the in-vehicle screen according to claim 3, wherein
before said decreasing the brightness of the in-vehicle screen, the brightness of the in-vehicle screen is saved; and
said increasing the brightness of the in-vehicle screen comprises adjusting the brightness of the in-vehicle screen to the saved brightness of the in-vehicle screen.

5. The brightness adjustment method for the in-vehicle screen according to any one of claims 1 to 4, wherein
said acquiring the traveling speed of the vehicle comprises:
acquiring an average traveling speed of the vehicle within a preset time period.

6. The brightness adjustment method for the in-vehicle screen according to any one of claims 1 to 4, wherein
the in-vehicle screen comprises a center console screen and/or a dashboard screen.

7. A brightness adjustment apparatus for an in-vehicle screen, comprising:
a speed acquisition module, configured to acquire a traveling speed of a vehicle; and
a brightness adjustment module, configured to adjust brightness of the in-vehicle screen based on the acquired traveling speed of the vehicle.

8. The brightness adjustment apparatus for the in-vehicle screen according to claim 7, wherein
the brightness adjustment module comprises:
a determination submodule, configured to determine whether the acquired traveling speed of the vehicle is greater than or equal to a first threshold; and
a brightness adjustment submodule, configured to decrease the brightness of the in-vehicle screen when the determination submodule determines that the acquired traveling speed of the vehicle is greater than or equal to the first threshold.

9. The brightness adjustment apparatus for the in-vehicle screen according to claim 8, wherein
the determination submodule is further configured to determine whether the acquired traveling speed of the vehicle is less than a second threshold; and
the brightness adjustment submodule is further configured to increase the brightness of the in-vehicle screen when the determination submodule determines that the acquired traveling speed of the vehicle is less than the second threshold;
wherein the second threshold is less than or equal to the first threshold.

10. The brightness adjustment apparatus for the in-vehicle screen according to claim 9, wherein
the brightness adjustment module further comprises a saving submodule, configured to save the brightness of the in-vehicle screen before the brightness adjustment submodule decreases the brightness of the in-vehicle screen; and
the brightness adjustment submodule is further configured to adjust the brightness of the in-vehicle screen to the saved brightness of the in-vehicle screen when the determination submodule determines that the acquired traveling speed of the vehicle is less than the second threshold.

11. The brightness adjustment apparatus for the in-vehicle screen according to any one of claims 7 to 10, wherein
the speed acquisition module is configured to acquire an average traveling speed of the vehicle within a preset time period.

12. The brightness adjustment apparatus for the in-vehicle screen according to any one of claims 7 to 10, wherein
the in-vehicle screen comprises a center console screen and/or a dashboard screen.

13. A controller, comprising a memory, a processor, and a program stored on the memory and capable of running on the processor, wherein when the program is executed by the processor, the steps of the method according to any one of claims 1 to 6 are implemented.

14. A recording medium having a computer program stored thereon, wherein the program is executable by a computer to implement the steps of the method according to any one of claims 1 to 6.
